# EUROPÄISCHE PATENTSCHRIFT

(11) **EP 3 484 747 B1**
(45) Veröffentlichungstag und Bekanntmachung des Hinweises auf die Patenterteilung: **14.06.2023**
(21) Anmeldenummer: 17768072.5
(22) Anmeldetag: 12.09.2017
(51) Int. Cl.: B60N 3/02, B61D 49/00

(54) **HALTESTANGENVORRICHTUNG ZUR BEFESTIGUNG AN DER DECKE EINES FAHRZEUGS**
HOLDING ROD DEVICE FOR FASTENING TO THE CEILING OF A VEHICLE
DISPOSITIF À BARRE DE RETENUE DESTINÉ À ÊTRE FIXÉ AU PLAFOND D'UN VÉHICULE

(30) Priorität: 16.09.2016 DE 102016217740
(43) Veröffentlichungstag der Anmeldung: 22.05.2019
(73) Patentinhaber: Siemens Mobility GmbH, 81739 München (DE)
(72) Erfinder: KEHL, Tobias, 90596 Schwanstetten (DE)
(74) Vertreter: Siemens Patent Attorneys
(86) Internationale Anmeldenummer: PCT/EP2017/072825
(87) Internationale Veröffentlichungsnummer: WO 2018/050619

(56) Entgegenhaltungen:
- WO-A1-2014/068505
- DE-A1- 10 321 662
- US-A1- 2006 144 433

## Beschreibung

Die Erfindung betrifft ein Fahrzeug des öffentlichen Personenverkehrs, insbesondere ein Schienenfahrzeug, mit einer Haltestangenvorrichtung.

Haltestangen für Fahrgäste von öffentlichen Verkehrsmitteln wie beispielsweise Busse oder Straßenbahnen sind weithin bekannt. So lehrt die DE 101 21 662 A1 eine Haltestangenvorrichtung für ein Fahrzeug des öffentlichen Personenverkehrs mit einem bügelförmig ausgebildeten Befestigungselement zur deckenseitigen Verankerung. Die Haltestangenvorrichtung weist eine mit dem Boden des Fahrzeugs verbundene, vertikal verlaufende Haltestange auf.

Aus der WO 2014/068505 A1 sind Haltevorrichtungen für Fahrzeuge des öffentlichen Personenverkehrs bekannt, bei denen die Haltevorrichtung Griffmöglichkeiten für mehrere Fahrgäste gleichzeitig aufweist.

Der Erfindung liegt die Aufgabe zugrunde, ein Fahrzeug, insbesondere Schienenfahrzeug mit wenigstens einer für unterschiedlich große Personen geeigneten Haltestangenvorrichtung vorzuschlagen, die in einem frei von Sitzen zu haltenden Bereich, insbesondere in einem Tür- oder einem Multifunktionsbereich des Fahrzeugs, insbesondere Schienenfahrzeugs, angeordnet werden kann.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Fahrzeug, insbesondere ein Schienenfahrzeug des öffentlichen Personenverkehrs, beispielsweise eine Straßenbahn des Personennahverkehrs, umfasst wenigstens eine Haltestangenvorrichtung, welche ein Fußkreuz zur Befestigung an einer Decke des Schienenfahrzeugs und ein dem Fußkreuz gegenüberliegendes freies Ende aufweist.

Bevorzugt ist die Haltestangenvorrichtung des erfindungsgemäßen Fahrzeugs so ausgebildet und insbesondere so im Fahrzeug angeordnet, dass das freie Ende der Haltestangenvorrichtung einen vorgegebenen Abstand größer Null zu einem Fußboden des Fahrzeugs aufweist.

Die Haltestangenvorrichtung wird somit ausschließlich an der Decke des Fahrzeugs befestigt. Die Haltestangenvorrichtung kann unmittelbar mittels des Fußkreuzes an der Decke des Schienenfahrzeugs befestigt werden. Weitergebildet ist das erfindungsgemäße Fahrzeug jedoch so ausgebildet, dass die Haltestangenvorrichtung frei entlang von Führungsschienen des Fahrzeugs positioniert und befestigt werden kann.

Das Fahrzeug weist bevorzugt entsprechende Führungsschienen, insbesondere C-Schienen, an der Decke, insbesondere an der Decke eines Fahrgastraums, zur Aufnahme und Befestigung der Haltestangenvorrichtung frei entlang der Führungsschienen auf. Die Führungsschienen verlaufen weitergebildet parallel zu einer Längsachse des Fahrzeugs.

Die Haltestangenvorrichtung wiederum weist dann ihrerseits zu den Führungsschienen an der Decke des Fahrzeugs komplementäre Befestigungsvorrichtungen zur freien Positionierung und Befestigung der Haltestangenvorrichtung an den Führungsschienen auf.

Mittels der Befestigungsvorrichtungen ist die Haltestangenvorrichtung somit frei entlang der Führungsschienen positionierbar und mit den Führungsschienen verbunden und damit an der Decke des Fahrzeugs befestigt.

Fußkreuze sind insbesondere aus dem Bereich der Bürostühle bekannt. Ein Fußkreuz bildet die Basis des Bürostuhls, an dem die Rollen befestigt sind. Das Fußkreuz eines Bürostuhls nahm früher die Form eines Kreuzes mit vier Armen an, wobei die Rollen an deren freien Enden der Arme befestigt waren. Aus sicherheitstechnischen Gründen werden heute meist fünf oder gar sechs Arme verwendet. In der Mitte des Fußkreuzes, wo sich die Arme kreuzen, wird eine Gasdruckfeder aufgenommen, an deren oberen Ende die Sitzfläche, Arm- und Rückenlehnen befestigt sind. Kräfte auf die Gasdruckfeder werden über das Fußkreuz geleitet und über die Rollen des Fußkreuzes auf den Fußboden übertragen. Die Kraftübertragung erfolgt somit auf mehrere Stellen des Fußbodens verteilt.

Analog zu den Bürostühlen dient bei der Haltestangenvorrichtung des erfindungsgemäßen Fahrzeugs das Fußkreuz als Basis zur Übertragung von Kräften in das Fahrzeug und hier zusätzlich zur Befestigung der Haltestangenvorrichtung im und am Fahrzeug.

Bevorzugt ist das Fußkreuz ausgebildet zur Befestigung der Haltestangenvorrichtung an mehreren, insbesondere zumindest drei, vorteilhaft genau vier, voneinander verschiedenen und voneinander beabstandeten Stellen der Decke des erfindungsgemäßen Fahrzeugs.

Dazu kann das Fußkreuz der Haltestangenvorrichtung des erfindungsgemäßen Fahrzeugs gemäß einer weiteren Weiterbildung sich kreuzende bzw. vier sich in einem Kreuzungs- oder Mittelpunkt treffende Arme aufweisen und entsprechend vier, an den jeweiligen Enden der gekreuzten Arme angeordnete Punkte zur Befestigung der Haltestangenvorrichtung an der Decke aufweisen. Somit lässt sich eine derart ausgebildete Haltestangenvorrichtung an vier voneinander verschiedenen und voneinander beabstandeten Stellen der Decke befestigen.

Die Punkte zur Befestigung der Haltestangenvorrichtung an der Decke und die entsprechenden Stellen der Decke können komplementär zueinander ausgebildet sein. Wie oben bereits ausgeführt, können Befestigungsvorrichtungen der Haltestangenvorrichtung komplementär zu Führungsschienen an der Decke des Fahrzeugs ausgebildet sein. Diese sind insbesondere am Fußkreuz angeordnet, insbesondere an den Punkten zur Befestigung der Haltestangenvorrichtung an der Decke. Die Befestigungsvorrichtungen bilden gemäß einer Ausführungsform die Punkte zur Befestigung der Haltestangenvorrichtung an der Decke.

Die Punkte des Fußkreuzes zur Befestigung der Haltestangenvorrichtung an der Decke sind vorteilhaft in einer gemeinsamen Ebene angeordnet.

Gemäß einer weiteren Weiterbildung der Erfindung umfasst die Haltestangenvorrichtung zwischen den Punkten zur Befestigung der Haltestangenvorrichtung an der Decke und ihrem freien Ende einen vorgegebenen Abstand größer Null. Insbesondere wenigstens ein Arm der Haltestangenvorrichtung zwischen den Punkten zur Befestigung der Haltestangenvorrichtung an der Decke und ihrem freien Ende ist für eine Person greifbar ausgeformt. Der Abstand des freien Endes zu den Punkten zur Befestigung der Haltestangenvorrichtung an der Decke wird weitergebildet senkrecht zur Ebene der Punkte zur Befestigung der Haltestangenvorrichtung an der Decke bemessen. Wenigstens ein greifbarer Arm ist dann zwischen den Punkten zur Befestigung der Haltestangenvorrichtung an der Decke und dem freiem Ende angeordnet, der sich mit einer Richtungskomponenten senkrecht zur Ebene erstreckt, der beispielsweise senkrecht auf die Ebene steht, in welcher die Punkte zur Befestigung der Haltestangenvorrichtung an der Decke liegen.

Die Haltestangenvorrichtung des erfindungsgemäßen Fahrzeugs ist vorteilhaft so ausgebildet und so im Fahrzeug angeordnet, dass wenigstens ein Arm der Haltestangenvorrichtung eine Länge und eine Höhe über einem Fußboden des Fahrzeugs aufweist, die so bemessen sind, dass der wenigstens eine Arm von Personen zwischen dem 5. Perzentil und dem 95. Perzentil greifbar ist. Der wenigstens eine Arm der Haltestangenvorrichtung erstreckt sich vom Fußkreuz an der Decke des Fahrzeugs in Richtung des Fußbodens des Fahrzeugs, insbesondere verläuft der wenigstens eine Arm der Haltestangenvorrichtung vertikal, und endet im freien Ende der Haltestangenvorrichtung über dem Fußboden in einer Höhe, so dass der wenigstens eine Arm der Haltestangenvorrichtung für den überwiegenden Teil der Menschen in greifbarer Höhe angeordnet ist, so dass sich Fahrgäste des Fahrzeugs an dem wenigstens einen Arm der Haltestangenvorrichtung zwischen dem Fußkreuz und dem freien Ende festhalten können.

Das Fußkreuz kann dabei einerseits recht flach ausgebildet sein - seine gekreuzten Arme zwischen den Punkten zur Befestigung der Haltestangenvorrichtung an der Decke und dem Kreuzungspunkt der gekreuzten Arme, insbesondere dem Mittelpunkt des Fußkreuzes, verlaufen ebenfalls näherungsweise in einer Ebene - und der wenigstens eine greifbare Arm zwischen den Punkten zur Befestigung der Haltestangenvorrichtung an der Decke und dem freien Ende der Haltestangenvorrichtung steht, ausgehend von jenem Kreuzungspunkt der gekreuzten Arme senkrecht auf diese Ebene. Dies spiegelt wiederum die Form eines herkömmlichen Bürostuhls wider. Dessen Gasdruckfeder ist anschaulich durch den greifbaren Arm ersetzt.

Andererseits kann die Haltestangenvorrichtung die Form eines sogenannten Vierfußes annehmen, wie er insbesondere bei Gehhilfen bekannt ist, wobei der Gehstock dann wiederum durch den wenigstens einen greifbaren Arm der Haltestangenvorrichtung ersetzt wird.

Erfindungsgemäß sind mehrere, bevorzugt genau vier, Arme der Haltestangenvorrichtung im freien Ende der Haltestangenvorrichtung miteinander verbunden, wobei wenigstens ein Arm unterhalb des Fußkreuzes vertikal verläuft. Die Arme gehen dabei vorteilhaft von den Punkten zur Befestigung der Haltestangenvorrichtung an der Decke aus und sind zumindest abschnittsweise greifbar. Das freie Ende der Haltestangenvorrichtung weist dabei von den Punkten zur Befestigung der Haltestangenvorrichtung an der Decke den vorgegebenen Abstand auf. Insbesondere laufen die von den Punkten zur Befestigung der Haltestangenvorrichtung an der Decke ausgehenden, zumindest abschnittsweise greifbaren Arme der Haltestangenvorrichtung im freien Ende der Haltestangenvorrichtung zusammen.

Gemäß einer Ausführungsform können die von den Punkten zur Befestigung der Haltestangenvorrichtung an der Decke ausgehenden, zumindest abschnittsweise greifbaren Arme der Haltestangenvorrichtung erstmalig im freien Ende der Haltestangenvorrichtung miteinander verbunden sein. Eine Zwischenverbindung kann dagegen zu einer erhöhten Stabilität beitragen, insbesondere bei relativ langen Armen. Somit können die von den Punkten zur Befestigung der Haltestangenvorrichtung an der Decke ausgehenden, zumindest abschnittsweise greifbaren Arme der Haltestangenvorrichtung auch bereits zwischen den Punkten zur Befestigung der Haltestangenvorrichtung an der Decke und dem freien Ende der Haltestangenvorrichtung untereinander verbunden sein.

Da eine solch ausgeformte Haltestangenvorrichtung mehrere, zumindest abschnittsweise greifbare Arme und damit mehrere "(Teil-) Haltestangen" umfasst, wird der Terminus Haltestangenvorrichtung verwendet.

Gemäß einer weiteren Weiterbildung der Erfindung können die, insbesondere zumindest abschnittsweise greifbaren Arme einer Haltestangenvorrichtung mit mehreren, insbesondere zumindest abschnittsweise greifbaren Armen, die im freien Ende miteinander verbunden sind, wobei das freie Ende einen vorgegebenen Abstand größer Null zu Punkten zur Befestigung der Haltestangenvorrichtung an der Decke aufweist, ausgehend von den Punkten zur Befestigung der Haltestangenvorrichtung an der Decke geschwungen ausgebildet sein, so dass sie aufeinander zulaufen und in einem Mittelteil zwischen den Punkten zur Befestigung der Haltestangenvorrichtung an der Decke und dem freien Ende weiter parallel zueinander verlaufen. Die Arme der Haltestangenvorrichtung sind dabei insbesondere im Mittelteil greifbar. Analog zu oben weist daher insbesondere der Mittelteil der Haltestangenvorrichtung eine Länge und eine Höhe über einem Fußboden des Fahrzeugs auf, die so bemessen sind, dass die Arme im Mittelteil von Personen zwischen dem 5. Perzentil und dem 95. Perzentil greifbar sind. Auch die Durchmesser zumindest der parallel zueinander verlaufenden Arme im Mittelteil sowie deren Abstände zueinander sind weitergebildet so bemessen, dass wenigstens ein Arm, insbesondere aber alle Arme, zumindest im Mittelteil umgreifbar sind. Ein typischer Durchmesser beträgt beispielsweise 35 mm.

Die Abstände der Punkte zur Befestigung der Haltestangenvorrichtung an der Decke sind logischerweise größer als die Abstände der parallel zueinander verlaufenden Arme im Mittelteil der Haltestange. Dies bringt insbesondere Vorteile bei der Krafteinleitung in die Decke des Fahrzeugs mit sich. Die Abstände der Punkte zur Befestigung der Haltestangenvorrichtung an der Decke sind vorteilhaft so bemessen, dass typische Kräfte auf das Freie Ende der Haltestangenvorrichtung von dieser auf das erfindungsgemäße Fahrzeug übertragbar sind, ohne dass der Durchmesser der Arme der Haltestangenvorrichtung im Bereich des Fußkreuzes bzw. zum Fußkreuz hin signifikant zunimmt. Weitergebildet weisen die Arme der Haltestangenvorrichtung von den Punkten zur Befestigung der Haltestangenvorrichtung an der Decke bis zum freien Ende einen im Wesentlichen konstanten Querschnitt, insbesondere einen im Wesentlichen konstanten Durchmesser auf.

In einer Seitenansicht ist die Haltestangenvorrichtung dann näherungsweise champagnerkelchförmig ausgebildet. Das Fußkreuz bildet dabei die Form des Kelchs ab, der Stil wird durch die parallelen Arme geformt. Der Fuß des Champagnerkelchs wird nicht durch die Haltestangenvorrichtung abgebildet.

Im freien Ende der Haltestange vereinen sich die Arme beispielsweise dadurch, dass sie am freien Ende zusammenlaufen und miteinander, beispielsweise stoffschlüssig, verbunden sind, beispielsweise miteinander verschweißt sind. Alternativ kann auch ein vorgefertigtes Bauteil, beispielsweise in Form eines umgedrehten Vierfußes Verwendung finden. Die parallel zueinander verlaufenden Arme enden in einer gemeinsamen Ebene und schließen sich jeweils an dem vorgefertigten Bauteil an.

Ein Vorteil der Erfindung besteht daher darin, dass die Haltestangenvorrichtung relativ wenig Raum im Fahrgastbereich des erfindungsgemäßen Fahrzeugs einnimmt, dennoch fest verankert ist und insbesondere durch die Führungsschienen flexibel im Fahrzeug anzuordnen ist.

Gegenüber Deckenhaltestangen, auch wenn sie mit Halteschlaufen ausgerüstet sind, weist die Haltestangenvorrichtung darüber hinaus den Vorteil auf, dass sich auch kleinere Personen daran festhalten können.

In solchen Fällen würde eine vertikale Haltestange eingebaut, mit Anbindungen an der Decke und am Fußboden. Am Fußboden mit Verschraubungen direkt im Fußboden oder mit Durchbrüchen durch den Fußboden und Befestigungen unmittelbar am Rohbau.

Insbesondere bei einer nachträglichen Montage weist der Rohbau des Schienenfahrzeugs keine Befestigungspunkte für Deckenhaltestangen oder für vertikale Haltestangen zwischen der Decke und dem Fußboden des Fahrzeugs auf. Bohrungen oder Aufschweißen von Befestigungsbutzen wären erforderlich.

Bei vertikalen Haltestangen müssten zudem meist die Fußbodenplatten durchbrochen werden, was zu einer höheren Gefährdung bezüglich Verrottung führen kann. Abdichtungsmaßnahmen sind meist sehr aufwändig und nicht dauerhaft beständig.

Die Anbindung der Haltestangenvorrichtung hingegen erfolgt ausschließlich an der Decke des erfindungsgemäßen Fahrzeugs. Die Konstruktion ist auf mehrere Befestigungspunkte aufgeteilt, so dass die Kräfte und Momente durch die Haltestangen nur über die Decke abgefangen werden. Mehrere mögliche Befestigungspositionen, insbesondere durch die Befestigung der Haltestangenvorrichtung an den Führungsschienen und der damit einhergehenden freien Positionierbarkeit der Haltestangenvorrichtung entlang von C-Schienen an der Decke, und die Notwendigkeit einer steiferen Anbindung wurden kombiniert und über vier zusammenlaufende Arme realisiert. Der Fahrgast kann sich bis zu einer normalen Griffhöhe wie bei einer herkömmlichen vertikalen Haltestange festhalten. Damit wird ein Anbinden am Fußboden mit allen oben beschriebenen Nachteilen verhindert.

Somit ist keine Anbindung an der Fußbodenplatte erforderlich, kein Durchbruch durch die Fußbodenplatte erforderlich und keine zusätzlichen Anbindungspunkte am Rohbau erforderlich. Ein einfaches Nachrüsten durch ausschließliches Anbinden an bestehenden C-Schienen an der Decke ist möglich und kostengünstig zu verwirklichen. Bei Bedarf ist ein einfaches Verschieben in Fahrzeugrichtung entlang der C-Schienen möglich, da nicht auf feste Anbindungspunkte am Rohbau geachtet werden muss. Im Gegensatz zu einer üblichen Deckenhaltestange können sich erfindungsgemäß auch kleine Personen und Kinder an der Haltestangenvorrichtung festhalten.

Des Weiteren sei hier eine verbesserte Übertragung von Kräften im Vergleich zur Übertragung von Hebelkräften in den Boden und punktuell in die Decke anzuführen.

Wie oben bereits ausgeführt ist die Haltestangenvorrichtung so im Fahrzeug angeordnet, dass das freie Ende der Haltestangenvorrichtung einen vorgegebenen Abstand größer Null zum Fußboden des Fahrzeugs aufweist. Der Abstand sollte wenigstens 100 mm betragen, so dass ein Einklemmen von Füßen verhindert wird. Weitergebildet beträgt er wenigstens 200 mm. Der Abstand ist gemäß einer weiteren Weiterbildung so bemessen, dass ein normgerechter Kinderwagen unterhalb des freien Endes stehen kann. Die EN 1888 gilt beispielsweise als zum Zeitpunkt der Patentanmeldung gültiger europäischer Standard für Kinderwagen. Dann kann der Abstand des freien Endes der Haltestangenvorrichtung zum Fußboden des Fahrzeugs auch beispielsweise 900 mm betragen. In einer alternativen Variante ist der Abstand so bemessen, dass gerade kein Kinderwagen unter der Haltestange abstellbar ist.

Eine weitere Weiterbildung der Erfindung besteht darin, dass die Haltestangenvorrichtung so ausgebildet und im Fahrzeug angeordnet ist, dass ein Abstand zwischen einem Fußboden des Fahrzeugs und dem Fußkreuz so bemessen ist, dass Personen unter dem 95. Perzentil unterhalb des Fußkreuzes auf dem Fußboden stehen können, selbstverständlich ohne das Fußkreuz mit dem Kopf zu berühren.

Eine weitere Ausführungsform sieht vor, dass die Haltestangenvorrichtung so ausgebildet und im Fahrzeug angeordnet ist, dass, insbesondere ausschließlich, große Personen zwischen dem 80. Perzentil und dem 95. Perzentil unmittelbar die Arme des Fußkreuzes, insbesondere über Kopf, greifen können, um sich daran festzuhalten.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt eine Schnittdarstellung eines erfindungsgemäßen Fahrzeugs mit Haltestangenvorrichtung perspektivisch in Seitenansicht,
- Fig. 2: zeigt die Haltestangenvorrichtung aus Fig. 1 von einer anderen Seite,
- Fig. 3: zeigt die Haltestangenvorrichtung aus Fig. 1 von unten,
- Fig. 4: zeigt einen Vierfuß als Abschluss der Haltestangenvorrichtung am freien Ende in einer Draufsicht,
- Fig. 5: zeigt den Vierfuß aus Fig. 4 von der Seite.

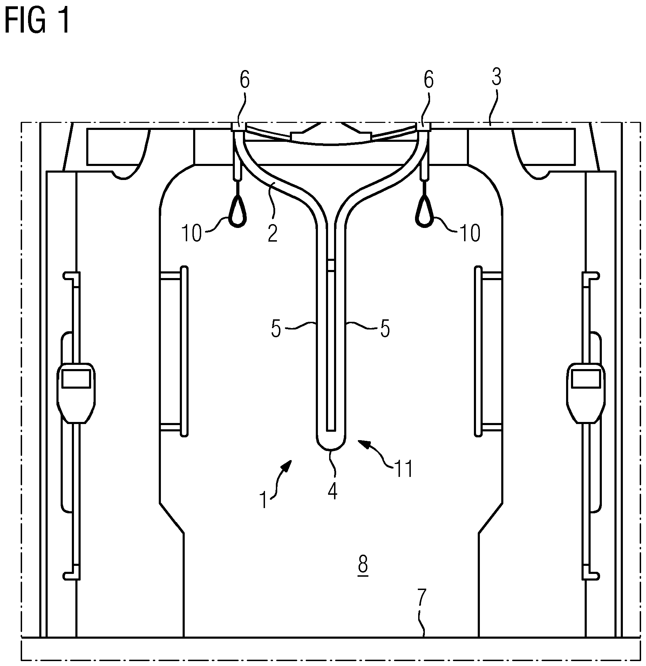

In Fig. 1, Fig. 2 und Fig. 3 ist dieselbe Haltestangenvorrichtung 1 aus unterschiedlichen Perspektiven in einem montierten Zustand in einem Innenraum 8 eines Niederflur-Schienenfahrzeugs dargestellt. Daher werden die genannten Figuren nachfolgend gemeinsam beschrieben.

Das Niederflur-Schienenfahrzeug weist C-förmige Führungsschienen 6 an einer Decke 3 des Innenraums 8 auf, mit welchen die Haltestangenvorrichtung 1 verbunden ist. Dazu weist die Haltestangenvorrichtung 1 nicht im Detail veranschaulichte, zur den C-förmigen Führungsschienen 6 komplementär ausgebildete Befestigungsvorrichtungen auf, um die Haltestangenvorrichtung 1 frei entlang der C-förmigen Führungsschienen 6 positionieren und befestigen zu können. Logischerweise ist dann die Haltestangenvorrichtung 1 mittels der zu den Führungsschienen 6 komplementären Befestigungsvorrichtungen mit den Führungsschienen 6 und somit mit dem Niederflur-Schienenfahrzeug verbunden.

Hier ist die Haltestangenvorrichtung 1 im Bereich einer Tür zum Innenraum 8 angeordnet. Tür- oder Multifunktionsbereiche sind meist freizuhalten von Sitzen und ermöglichen das Abstellen von Fahrrädern, Rollstühlen oder Kinderwagen. Daher ist die Anordnung von Haltemöglichkeiten für Fahrgäste in Form von üblichen Haltestangen schwierig. Hier sind beispielsweise auch Deckenhaltestangen 9 parallel zu einer Fahrzeuglängsachse vorgesehen. An den Deckenhaltestangen 9 sind zusätzlich Halteschlaufen 10 befestigt. Dennoch können kleinere Menschen weder die Halteschlaufen 10 noch die Deckenhaltestangen 9 erreichen, um sich daran festzuhalten.

Damit sich jedoch auch kleinere Menschen in dem Türbereich sicher aufhalten können dient erfindungsgemäß die Haltestangenvorrichtung 1.

Die Haltestangenvorrichtung 1 umfasst hier vier Arme 5, die von den in den C-förmigen Führungsschienen 6 geführten Befestigungsvorrichtungen bis zu einem freien Ende 4 der Haltestangenvorrichtung 1 reichen.

Zur ausschließlichen Befestigung der Haltestangenvorrichtung 1 an der Decke 3 wären drei Punkte notwendig, um eine ausreichende Stabilität der Haltestangenvorrichtung 1 gegenüber horizontal auf die Haltestangenvorrichtung 1 einwirkenden Kräfte zu erreichen. Bei zwei voneinander beabstandeten, parallellaufenden Führungsschienen 6 scheint jedoch die Befestigung der Haltestangenvorrichtung 1 an der Decke 3 über vier Punkte vorteilhaft. Die vier Punkte zur Befestigung der Haltestangenvorrichtung 1 an der Decke 3 liegen hier in einer gemeinsamen Ebene und spannen ein Quadrat in dieser gemeinsamen Ebene auf. Die vier Punkte sind somit äquidistant zu einem virtuellen Schwer- oder Mittelpunkt des gedachten Quadrats angeordnet. So ist eine einfache Montage der Haltestangenvorrichtung 1 gewährleistet. Die vier Punkte zur Befestigung der Haltestangenvorrichtung 1 an der Decke 3 stellen Enden der vier Arme 5 und somit ein dem freien Ende gegenüberliegendes, der Decke 3 zugewandtes Ende der Haltestangenvorrichtung 1 dar. Die vier Punkte zur Befestigung der Haltestangenvorrichtung 1 an der Decke 3 sind in diesem Ausführungsbeispiel durch die oben genannten, zu den Führungsschienen 6 komplementären Befestigungsvorrichtungen gebildet.

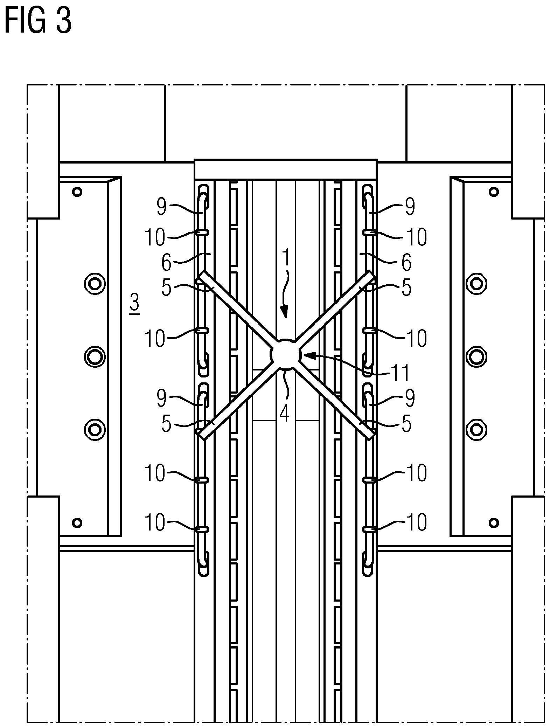

Die Arme 5 verlaufen hier geschwungen aufeinander zu, ausgehend von den Punkten zur Befestigung der Haltestangenvorrichtung 1 an der Decke 3. In der Ansicht gemäß Fig. 3 von unten, respektive in einem horizontalen Schnitt, verlaufen die Arme 5 von den Punkten zur Befestigung der Haltestangenvorrichtung 1 an der Decke 3 zu einem virtuellen Schwer- oder Mittelpunkt des gedachten Quadrats hin, welches sie selbst aufspannen.

Sie treffen oder kreuzen sich jedoch zunächst nicht, sondern verlaufen weiter parallel zueinander zum freien Ende 4 hin, wo sie sich vereinen. Dabei können die Arme 5 im freien Ende 4 zusammenlaufen und dort beispielsweise stoffschlüssig miteinander verbunden sein. Alternativ ist ein separates Bauteil, beispielsweise ein Vierfuß 11, zur Verbindung der Arme 5 vorgesehen. Die Arme 5 sind beispielsweise als Stangen oder Röhren ausgebildet.

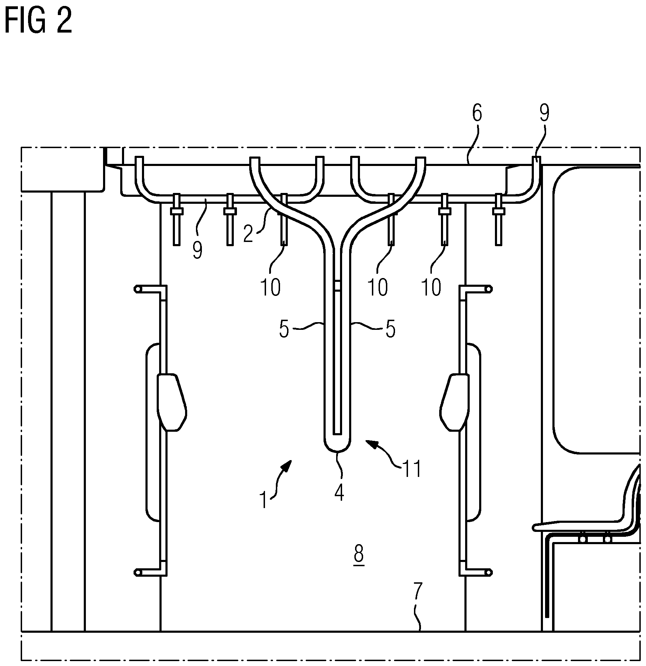

Obwohl die Arme 5 erst im freien Ende 4 miteinander verbunden sein können, nimmt die Haltestangenvorrichtung 1 in einem oberen Teil dennoch die Form eines Fußkreuzes 2 an. Daher wird der obere Teil, in welchem die Arme 5 geschwungen aufeinander zulaufen, bis zu dem Bereich der Haltestangenvorrichtung 1, in welchem sie parallel zueinander verlaufen, hier als Fußkreuz 2 bezeichnet. Der Bereich der Haltestangenvorrichtung 1, in welchem die Arme 5 parallel zueinander verlaufen, wird Mittelteil genannt. Der untere Teil der Haltestangenvorrichtung 1, in welchem die Arme hier miteinander verbunden sind, bildet das freie Ende 4 der Haltestangenvorrichtung 1. In Fig. 1 und Fig. 2 ähnelt die Haltestangenvorrichtung 1 in der Seitenansicht der Silhouette eines Champagnerkelchs ohne Standfuß.

Das Fußkreuz 2 zeichnet aus, dass Kräfte auf den Mittelteil als eine näherungsweise als geradlinig betrachtbare Struktur, in mehrere, voneinander beabstandete Punkte verteilt in die Decke des Fahrzeugs eingeleitet werden können.

Im Mittelteil zwischen Fußkreuz 2 und freiem Ende 4 verlaufen die Arme 5 im hier veranschaulichten Gebrauchszustand der Haltestangenvorrichtung 1, montiert im Fahrzeug, vertikal und somit in Richtung einer Hochachse des Fahrzeugs. Die Arme 5 sind für durchschnittliche Personen - insbesondere für Menschen mit Anthropometrie zwischen einer sogenannten 5 Perzentil Frau und von einem sogenannten 95 Perzentil Mann - zumindest im Mittelteil einzeln umgreifbar, d.h. sie weisen einen entsprechend bemessenen Abstand zueinander und jeweils einen entsprechend bemessenen Querschnitt auf. Darüber hinaus weisen sie eine entsprechende Länge zwischen dem Fußkreuz 2 und dem freiem Ende 4 sowie eine gewisse Höhe über dem Fußboden 7 des Fahrzeugs auf. Die Arme 5 im Mittelteil befinden sich somit auf typischer Greifhöhe.

Der Abstand zwischen dem Fußboden 7 des Fahrzeugs und dem freien Ende 4 beträgt beispielsweise mindestens 900 mm. Dies bietet den Vorteil, dass ein Kinderwagen unter das freie Ende 4 der Haltestangenvorrichtung 1 geschoben und abgestellt werden kann, ohne diese zu berühren. Dadurch lässt sich der Platz im Türbereich optimal ausnutzen.

Zudem können sich auch großgewachsene Menschen im Türbereich aufhalten, ohne mit der Haltestange zu kollidieren, da zwischen den geschwungenen Armen 5 des Fußkreuzes 2 und dem Fußboden 7 ebenfalls so bemessen ist, dass eine großgewachsene Person, beispielsweise ein sogenannter 95 Perzentil Mann, unter den geschwungenen Armen 5 des Fußkreuzes 2 stehen kann, ohne mit dem Kopf daran zu stoßen. Gleichzeitig könnte er die geschwungenen Armen 5 des Fußkreuzes 2 über Kopf greifen, um sich daran festzuhalten.

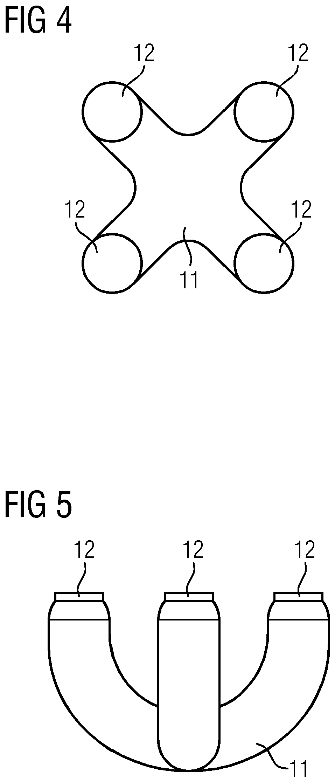

In Fig. 4 und Fig. 5 ist nun ein Vierfuß 11 als unterer Abschluss der Haltestangenvorrichtung 1 skizziert. Der Vierfuß 11 bildet das freie Ende 4 der Haltestangenvorrichtung 1. Er ist hier als Gussteil ausgeführt. Alternativ können die Rohre der Arme im Bereich des freien Endes auch gebogen und miteinander verschweißt sein. Der Vierfuß 11 umfasst vier Anschlusseinrichtungen 12 zur Befestigung der vier Arme 5 der Haltestangenvorrichtung 1 aus den Figuren 1 bis 3. Die Arme 5 werden auf die Anschlusseinrichtungen 12 aufgesteckt und mit dem Vierfuß 11 verspannt, verschraubt oder stoffschlüssig verbunden. Der Vierfuß 11 ist so ausgebildet, dass er die Form der Arme 5 aufnimmt und diese scheinbar zusammenführt, so dass die Arme 5 im Vierfuß 11 dann scheinbar kulminieren.

## Patentansprüche

1. Fahrzeug, insbesondere Schienenfahrzeug, mit wenigstens einer Haltestangenvorrichtung (1), wobei die Haltestangenvorrichtung (1) ein Fußkreuz (2) zur Befestigung an einer Decke (3) des Fahrzeugs und ein dem Fußkreuz (2) gegenüberliegendes freies Ende aufweist,
**dadurch gekennzeichnet, dass**
die Haltestangenvorrichtung (1) so ausgebildet und im Fahrzeug angeordnet ist, dass sie mehrere Arme (5) umfasst, die im freien Ende (4) miteinander verbunden sind, wobei wenigstens ein Arm (5) unterhalb des Fußkreuzes (2) vertikal verläuft.

2. Fahrzeug nach Anspruch 1,
**dadurch gekennzeichnet, dass**
die Haltestangenvorrichtung (1) so ausgebildet und im Fahrzeug angeordnet ist, dass das Fußkreuz (2) ausgebildet ist zur Befestigung der Haltestangenvorrichtung (1) an mehreren voneinander verschiedenen und voneinander beabstandeten Stellen der Decke (3).

3. Fahrzeug nach einem der Ansprüche 1 oder 2,
**dadurch gekennzeichnet, dass**
die Haltestangenvorrichtung (1) so ausgebildet und im Fahrzeug angeordnet ist, dass das freie Ende (4) einen vorgegebenen Abstand größer Null zu Punkten zur Befestigung der Haltestangenvorrichtung (1) an der Decke (3) aufweist.

4. Fahrzeug nach Anspruch 3,
**dadurch gekennzeichnet, dass**
die Haltestangenvorrichtung (1) so ausgebildet und im Fahrzeug angeordnet ist, dass die Haltestangenvorrichtung (1) wenigstens einen greifbaren Arm (5) zwischen den Punkten zur Befestigung der Haltestangenvorrichtung (1) an der Decke (3) und dem freien Ende (4) aufweist.

5. Fahrzeug nach Anspruch 1,
**dadurch gekennzeichnet, dass**
die Haltestangenvorrichtung (1) so ausgebildet und im Fahrzeug angeordnet ist, dass die Arme (5) ausgehend von den Punkten zur Befestigung der Haltestangenvorrichtung (1) an der Decke (3) geschwungen ausgebildet sind, so dass sie aufeinander zulaufen und in einem Mittelteil zwischen den Punkten zur Befestigung der Haltestangenvorrichtung an der Decke (3) und dem freien Ende (4) weiter parallel zueinander verlaufen.

6. Fahrzeug nach Anspruch 5,
**dadurch gekennzeichnet, dass**
die Haltestangenvorrichtung (1) so ausgebildet und im Fahrzeug angeordnet ist, dass die Abstände der parallel zueinander verlaufenden Arme (5) im Mittelteil der Haltestangenvorrichtung (1) so bemessen sind, dass wenigstens ein Arm (5) umgreifbar ist.

7. Fahrzeug nach einem der vorherigen Ansprüche
**dadurch gekennzeichnet, dass**
die Haltestangenvorrichtung (1) so ausgebildet und im Fahrzeug angeordnet ist, dass das freie Ende (4) einen vorgegebenen Abstand größer Null zu einem Fußboden (7) des Fahrzeugs aufweist, welcher so bemessen ist, dass ein normgerechter Kinderwagen unterhalb des freien Endes (4) stehen kann.

8. Fahrzeug nach einem der vorherigen Ansprüche
**dadurch gekennzeichnet, dass**
die Haltestangenvorrichtung (1) so ausgebildet und im Fahrzeug angeordnet ist, dass ein Abstand zwischen einem Fußboden (7) des Fahrzeugs und dem Fußkreuz (2) so bemessen ist, dass Personen unter dem 95. Perzentil unterhalb des Fußkreuzes (2) auf dem Fußboden (7) stehen können.

9. Fahrzeug nach einem der vorherigen Ansprüche
**dadurch gekennzeichnet, dass**
die Haltestangenvorrichtung (1) so ausgebildet und im Fahrzeug angeordnet ist, dass wenigstens ein Arm (2) eine Länge und eine Höhe über einem Fußboden (7) des Fahrzeugs aufweist, die so bemessen sind, dass der wenigstens eine Arm (5) von Personen zwischen dem 5. Perzentil und dem 95. Perzentil greifbar ist.

10. Fahrzeug nach einem der vorherigen Ansprüche
**dadurch gekennzeichnet, dass**
das Fahrzeug Führungsschienen (6) an der Decke (3) zur Befestigung der Haltestangenvorrichtung (1) frei entlang der Führungsschienen (6) aufweist.

11. Fahrzeug nach Anspruch 10,
**dadurch gekennzeichnet, dass**
die Haltestangenvorrichtung (1) zu den Führungsschienen (6) an der Decke (3) des Fahrzeugs komplementäre Befestigungsvorrichtungen an den Punkten zur Befestigung der Haltestangenvorrichtung an der Decke (3) zur freien Positionierung und Befestigung der Haltestangenvorrichtung (1) an den Führungsschienen (6) aufweist, mittels welcher Befestigungsvorrichtungen sie an den Führungsschienen (6) befestigt ist.

## Claims

1. Vehicle, in particular rail vehicle, with at least one holding rod apparatus (1), wherein the holding rod apparatus (1) has a cruciform base (2) for fastening to a ceiling (3) of the vehicle and a free end lying opposite the cruciform base (2),
**characterised in that**
the holding rod apparatus (1) is embodied and arranged in the vehicle such that it comprises a plurality of arms (5), which are interconnected at the free end (4), wherein at least one arm (5) runs vertically below the cruciform base (2) .

2. Vehicle according to claim 1,
**characterised in that**
the holding rod apparatus (1) is embodied and arranged in the vehicle such that the cruciform base (2) is embodied for fastening the holding rod apparatus (1) to a plurality of points on the ceiling (3) which are different from one another and spaced apart from one another.

3. Vehicle according to one of claims 1 or 2,
**characterised in that**
the holding rod apparatus (1) is embodied and arranged in the vehicle such that the free end (4) has a predefined distance, greater than zero, from points for fastening the holding rod apparatus (1) to the ceiling (3).

4. Vehicle according to claim 3,
**characterised in that**
the holding rod apparatus (1) is embodied and arranged in the vehicle such that the holding rod apparatus (1) has at least one grippable arm (5) between the points for fastening the holding rod apparatus (1) to the ceiling and the free end (4).

5. Vehicle according to claim 1,
**characterised in that**
the holding rod apparatus (1) is embodied and arranged in the vehicle such that the arms (5) are embodied as curved, starting from the points for fastening the holding rod apparatus (1) to the ceiling (3), such that they run towards one another and continue to run in parallel with one another in a centre part between the points for fastening the holding rod apparatus to the ceiling (3) and the free end (4).

6. Vehicle according to claim 5,
**characterised in that**
the holding rod apparatus (1) is embodied and arranged in the vehicle such that the distances between the arms (5) running in parallel with one another in the centre part of the holding rod apparatus (1) are dimensioned such that at least one arm (5) can be grasped.

7. Vehicle according to one of the preceding claims,
**characterised in that**
the holding rod apparatus (1) is embodied and arranged in the vehicle such that the free end (4) has a predefined distance, greater than zero, from a floor (7) of the vehicle, which is dimensioned such that a standard pushchair can stand below the free end (4).

8. Vehicle according to one of the preceding claims,
**characterised in that**
the holding rod apparatus (1) is embodied and arranged in the vehicle such that a distance between a floor (7) of the vehicle and the cruciform base (2) is dimensioned such that persons below the 95^{th} percentile can stand on the floor (7) below the cruciform base (2).

9. Vehicle according to one of the preceding claims,
**characterised in that**
the holding rod apparatus (1) is embodied and arranged in the vehicle such that at least one arm (2) has a length and a height above a floor (7) of the vehicle, which are dimensioned such that the at least one arm (5) can be gripped by persons between the 5^{th} percentile and the 95^{th} percentile.

10. Vehicle according to one of the preceding claims,
**characterised in that**
the vehicle has guide rails (6) on the ceiling (3) for fastening the holding rod apparatus (1) freely along the guide rails (6).

11. Vehicle according to claim 10,
**characterised in that**
the holding rod apparatus (1) has fastening apparatuses complementary to the guide rails (6) on the ceiling (3) of the vehicle at the points for fastening the holding rod apparatus to the ceiling (3), for freely positioning and fastening the holding rod apparatus (1) to the guide rails (6), by means of which fastening apparatuses it can be fastened to the guide rails (6).

## Revendications

1. Véhicule, en particulier véhicule ferroviaire, comprenant au moins un dispositif (1) à barre de retenue, dans lequel le dispositif (1) à barre de retenue à une croix (2) de pied pour la fixation à un plafond (3) du véhicule et une extrémité libre opposée à la croix (2) de pied,
**caractérisé en ce que**
le dispositif (1) à barre de retenue est constitué et est disposé dans le véhicule, de manière à comporter plusieurs bras (5), qui sont reliés entre eux à l'extrémité (4) libre, au moins un bras (5) s'étendant verticalement en-dessous de la croix (2) à pied.

2. Véhicule suivant la revendication 1,
**caractérisé en ce que**
le dispositif (1) à barre de retenue est constitué et disposé dans le véhicule, de manière à ce que la croix (2) à pied soit constituée pour la fixation du dispositif (1) à barre de retenue à plusieurs endroits du plafond (3) différents les uns des autres et à distance les uns des autres.

3. Véhicule suivant l'une des revendications 1 ou 2,
**caractérisé en ce que**
le dispositif (1) à barre de retenue est constitué et disposé dans le véhicule, de manière à ce que l'extrémité (4) libre soit à une distance donnée à l'avance plus grande que zéro des points de fixation du dispositif (1) à barre de retenue au plafond (3).

4. Véhicule suivant la revendication 3,
**caractérisé en ce que**
le dispositif (1) à barre de retenue est constitué et disposé dans le véhicule, de manière à ce que le dispositif (1) à barre de retenue ait au moins un bras (5) pouvant être saisi entre les points de fixation du dispositif (1) à barre de retenue au plafond (3) et l'extrémité (4) libre.

5. Véhicule suivant la revendication 1,
**caractérisé en ce que**
le dispositif (1) à barre de retenue est constitué et disposé dans le véhicule, de manière à ce que les bras (5) soient constitués en étant arqués des points de fixation du dispositif (1) à barre de retenue au plafond (3), de manière à aller l'un vers l'autre et à s'étendre plus loin parallèlement entre eux, dans une partie médiane comprise entre les points de fixation du dispositif à barre de retenue et au plafond (3) et l'extrémité (4) libre.

6. Véhicule suivant la revendication 5,
**caractérisé en ce que**
le dispositif (1) à barre de retenue est constitué et disposé dans le véhicule, de manière à ce que les distances entre les bras (5) s'étendant parallèlement entre eux, dans la partie médiane du dispositif (1) à barre de retenue, soient telles qu'au moins un bras (5) puisse être saisi.

7. Véhicule suivant l'une des revendications précédentes,
**caractérisé en ce que**
le dispositif (1) à barre de retenue est constitué et monté dans le véhicule, de manière à ce que l'extrémité (4) libre soit à une distance donnée à l'avance plus grande que zéro d'un plancher (7) du véhicule, laquelle a une dimension telle qu'une voiture d'enfant aux normes puisse être mise en-dessous de l'extrémité (4) libre.

8. Véhicule suivant l'une des revendications précédentes,
**caractérisé en ce que**
le dispositif (1) à barre de retenue est constitué et disposé dans le véhicule, de manière à ce qu'une distance entre un plancher (7) du véhicule et la croix (2) de pied ait une dimension telle que des personnes sous le 95^{ème} pour-centile puissent se tenir sur le plancher (7) en-dessous de la croix (2) de pied.

9. Véhicule suivant l'une des revendications précédentes,
**caractérisé en ce que**
le dispositif (1) à barre de retenue est constitué et disposé dans le véhicule, de manière à ce qu'au moins un bras (2) ait une longueur et une hauteur au-dessus d'un plancher (7) du véhicule, qui ont des dimensions telles que le au moins un bras (5) puisse être saisi par des personnes entre le 5^{ème} pour-centile et le 95^{ème} pour-centile.

10. Véhicule suivant l'une des revendications précédentes,
**caractérisé en ce que**
le véhicule a des rails (6) de guidage sur le plafond (3) pour la fixation du dispositif (1) à barre retenue librement le long des rails (6) de guidage.

11. Véhicule suivant la revendication 10,
**caractérisé en ce que**
le dispositif (1) à barre de retenue a, pour la mise en position à volonté et la fixation du dispositif (1) à barre de retenue sur les rails (6) de guidage aux points de fixation du dispositif à barre de retenue au plafond (3), des dispositifs de fixation complémentaires des rails (6) de guidage du plafond (3) du véhicule, au moyen desquels dispositifs de fixation il est fixé aux rails (6) de guidage.
